(19) **Europäisches Patentamt / European Patent Office / Office européen des brevets**

(11) **EP 3 158 706 B1**

(12) **EUROPEAN PATENT SPECIFICATION**

(45) Date of publication and mention of the grant of the patent:
**03.06.2020 Bulletin 2020/23**

(21) Application number: **15730832.1**

(22) Date of filing: **15.06.2015**

(51) Int Cl.:
***H04L 29/06*** *(2006.01)*

(86) International application number:
**PCT/GB2015/051751**

(87) International publication number:
**WO 2015/193647 (23.12.2015 Gazette 2015/51)**

(54) **INEFFECTIVE NETWORK EQUIPMENT IDENTIFICATION**

UNWIRKSAME NETZWERKGERÄTIDENTIFIZIERUNG

IDENTIFICATION D'ÉQUIPEMENT DE RÉSEAU INEFFICACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2014 EP 14250084**

(43) Date of publication of application:
**26.04.2017 Bulletin 2017/17**

(73) Proprietor: **British Telecommunications public limited company**
**London EC1A 7AJ (GB)**

(72) Inventor: **KALLOS, George**
**London EC4V 5BT (GB)**

(74) Representative: **British Telecommunications public limited company**
**Intellectual Property Department**
**Ground Floor, Faraday Building**
**1 Knightrider Street**
**London EC4V 5BT (GB)**

(56) References cited:
**US-A1- 2012 072 983    US-B1- 7 376 969**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the Invention

The present invention relates to the identification of ineffective network equipment in a computer network. In particular it relates to the identification of network equipment that is relatively less effective at identifying network attacks for remediation of such network equipment.

Background of the Invention

Attacks or malicious occurrences in computer networks are an increasing problem. A malicious occurrence can include one or more of, inter alia: an intrusion; a security compromise; an unauthorised access; spoofing; tampering; repudiation; information access or disclosure; denial of service; elevation of privilege; communication, distribution or installation of malicious software such as computer contaminants or malware; or other attacks such as actions arising from threats to the security, stability, reliability or safety of computing or network resources. Attackers, also known as threat agents, can actively or passively engage in attacks exhibited as malicious occurrences in a computer network. Attacks can be directed at specific or generalised computing resources in communication with a computer network and attacks often exploit a vulnerability existing in one or more resources.

Countermeasures can be provided between attackers and target resources or at target resources including systems for detecting, filtering, preventing or drawing attention to actual or potential attacks. Network devices attached to a computer network can include, inter alia, routers, network switches, proxy servers, network attached storage, intrusion detection systems and network attached computing devices such as computers, personal computers, tablets, smartphones and the like. Such network devices can be configured to provide countermeasure services and will generate log, event, alarm or other tracking information reflecting the nature of network communication and/or the extent to which any measures are warranted or employed to counter actual or potential attacks.

Network devices and systems can vary considerably in their quality, configuration and the facilities and services offered and many networks are implemented with multiple different types and models of network device from potentially many different vendors. The configuration of such a disparate set of devices is complicated by the differing architectures, processes, options and facilities available to each and the reliability of countermeasures in differing devices can vary considerably due to differing facilities available in different devices and/or differing levels of effectiveness of configurations of different devices. It would be advantageous to detect when one or more network devices are ineffective at identifying attacks or malicious occurrences in a network. Identifying such ineffective devices may not be a deterministic process since certain attacks may be impossible or extremely difficult to detect. However, it would be particularly advantageous to detect ineffective network devices in a network with other network devices that are relatively more effective at identifying an attack, where such devices are potentially disparate in the facilities, configurations and event or log information they provide.

Time series analysis software implementations have been widely used for analysis of data sources. Examples include the generic data analytics tools such as Splunk and Tableaux. However such approaches are not effective when seeking to perform useful correlation analysis of disparate data sources or data sources generating event, log, alarm or incident information having disparity of format, content and/or semantic meaning where, for example, event or alarm information stored in event logs from one type of network device is not readily comparable to event or alarm information from another type of network device (such as devices from different vendors).

US7376969B1 describes real time monitoring and analysis of events from multiple network security devices.

US2012/0072983A1 describes a system and method for privacy enhanced cyber data fusion using temporal-behavioral aggregation and analysis.

Summary of the Invention

The present invention accordingly provides, in a first aspect, a method for detecting an ineffective network device in a set of network devices for a computer network as a device ineffective at identifying an attack in the network, the method comprising: receiving events generated by the set of network devices for each of a plurality of time periods, each event including an attribute belonging to a class of attributes; based on the received events, evaluating a normalised representative value of the attribute as a score for each network device for each of the plurality of time periods; for each of a plurality of pairs of devices in the set of network devices, evaluating a measure of similarity of scores for the pair for one or more time windows, each time window comprising two or more of the time periods; identifying a network device having evaluated similarity measures meeting a predetermined threshold as ineffective network devices, wherein events in the class of attributes indicate a severity of an occurrence in the computer network, wherein the score for a device for a time period is normalized by unit based normalization, and wherein the measure of similarity is evaluated using a cosine similarity calculation.

The present invention accordingly provides, in a second aspect, A computer system arranged to detect an ineffective network device in a set of network devices for a computer network as a device ineffective at identifying an attack in the network, the computer system including: an input unit to receive events generated by the set of network devices for each of a plurality of time periods, each event including an attribute belonging to a class of attributes; a processing system having at least one processor and being arranged to: evaluate a normalised representative value of the attribute as a score for each network device for each of the plurality of time periods based on the received events; evaluating a measure of similarity of scores for each of a plurality of pairs of devices in the set of network devices for one or more time windows, each time window comprising two or more of the time periods; and identify a network device having evaluated similarity measures meeting a predetermined threshold as ineffective network devices, wherein events in the class of attributes indicate a severity of an occurrence in the computer network, wherein the score for a device for a time period is normalized by unit based normalization, and wherein the measure of similarity is evaluated using a cosine similarity calculation.

The present invention accordingly provides, in a third aspect, a computer program element comprising computer program code to, when loaded into a computer system and executed thereon, cause the computer to perform the steps of the method set out above.

Thus embodiments of the present invention provide a method and system for comparing and correlating diverse categorical data or variables from potentially many different network devices as data sources. A scoring method based on event attributes mapped to common classes of attributes provides a common normalised numerical range for application of a similarity correlation algorithm. Such an approach provides behavioural analysis and comparison of potentially different network devices, different in terms of a type of device (such as a switch versus a router versus a firewall) and/or in terms of a vendor, model, version, configuration or capability of devices, during an attack in the network. The measure of similarity provides for the identification of network devices being relatively ineffective at identifying or reacting to an attack, such as network devices having outlier measures of similarity or one or more measures of similarity that meet a predetermined threshold measure indicative of ineffectiveness of a device. Embodiments of the present invention effect changes to one or more network devices in response to an identification of an ineffective device, such as, inter alia: disabling an ineffective network device in order to, for example, implement a replacement network device; modifying a configuration of an ineffective network device to increase the effectiveness of the device in identifying the attack; or causing an ineffective network device to enter a secure, elevated, heightened or reactive mode of operation consistent with the device having detected an attack so as to cause countermeasure or remedial action by the network device.

Preferably the attack includes malicious network traffic communicated to the computer network.

Preferably the attack occurrence includes an unauthorised intrusion to a device attached to the computer network.

Preferably the score for a device for a time period is calculated from an arithmetic mean of attribute values for the time period.

Preferably the score for a device for a time period is calculated from a rate of generation of events including an attribute belonging to the class of attributes.

Preferably an identified ineffective network device is disabled.

Preferably a configuration of an identified ineffective network device is modified to increase a sensitivity of the ineffective network device to detect the attack.

Preferably an identified ineffective network device is caused to enter a secure mode of operation to protect against the attack.

Preferably the set of network devices includes devices from different vendors.

Brief Description of the Drawings

Embodiments of the present invention will now be described, by way of example only, with reference to the accompanying drawings, in which:

Figure 1 is a block diagram of a computer system suitable for the operation of embodiments of the present invention;
Figure 2 is a component diagram of a computer system arranged to detect an ineffective network device in accordance with an embodiment of the present invention;
Figure 3 is a flowchart of a method for identifying an ineffective network device in a set of network devices for a computer network in accordance with an embodiment of the present invention;
Figure 4 illustrates a class of attributes including network device attribute mappings in accordance with an embodiment of the present invention; and
Figure 5 is a component diagram of a computer system arranged to detect an ineffective network device in accordance with an embodiment of the present invention.

Detailed Description of the Embodiments

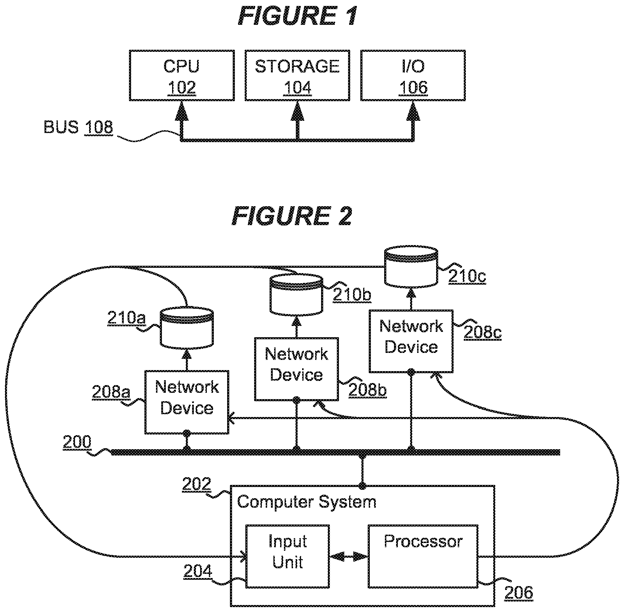

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of a computer system 202 arranged to detect an ineffective network device in accordance with an embodiment of the present invention. A computer network 200 such as a wired or wireless network communicatively couples network devices 208a, 208b and 208c. While three network devices are illustrated in Figure 2 it will be apparent to those skilled in the art that any number of three or more network devices could alternatively be provided in communication with the network 200. Each network device is a software, hardware, firmware or combination component adapted to communicate via the network 200. Examples of network devices include, inter alia: dedicated network devices such as routers, switches, repeaters, multiplexors, hubs, gateways, modems and the like; network appliances such as network connected computer systems operating as web servers, proxy servers, gateways, access points and the like; network attached devices such as network attached storage, streaming devices, terminals, televisions and the like; and computer systems such as personal computers, minicomputers, mainframe computers, laptops, smartphones, tablet computers and the like. The network devices 208a, 208b and 208c are configured to generate event, alarm or log information (hereinafter referred to as "events") reflecting activity on the network 200 detected, involving or otherwise apparent to the network devices. Events are generated by the network device for storage, communication or consumption, where such consumption may be by other devices, systems or software. In the arrangement of Figure 2 each network device 208a, 208b and 208c has associated a corresponding storage 210a, 210b and 210c as a data store, file or database for storing generated events. Such an arrangement is purely exemplary and events could equally be communicated by one or more of the network devices 208a, 208b and 208c to a network attached system operable to receive, store and/or process such events. The network devices 208a, 208b and 208c generate events over time as a time series of events. Events can be generated ad hoc when occasioned by an occurrence in the network 200 or a network device, and events include an indication of their temporal relationship to each other by way of a time/date stamp, time base plus offset or similarly suitable means. Thus, for a particular network device 208a, 208b, 208c, a time series of events can be generated. It will be appreciated that such a series of events may not have a regular, periodic or synchronised nature and that varying lengths of time or, indeed, no time can pass between events.

Events generated by the network devices 208a, 208b and 208c are comprised of event fields as attributes of the events. For example, event attributes can include, inter alia: date and time information; network device identification information, such as an identifier, make, model number, network address or other identification information; one or more textual messages such as error, alert, alarm or information messages; error, fault, alert or event codes according to a device or vendor coding system; priority, severity, seriousness or other rating information for an event; network packet identifiers; network address information for network communications to which an event pertains; network socket or port information such as a transmission control protocol (TCP) port; one or more portions of a network communication such as a portion of a network packet; and other attributes as will be apparent to those skilled in the art. In a preferred embodiment, the network devices 208a, 208b and 208c are different in at least one respect such that the event information generated by at least two network devices is not readily comparable due to differences in event content, formatting, value ranges, data types or any other characteristics, contents, nature or format of the events. For example, network devices 208a, 208b and 208c can be provided by different vendors, "a", "b" and "c" respectively, with corresponding differences in the structure, terminology, content and values of attributes in generated events. Thus advantages of embodiments of the present invention are especially apparent where devices and events generated by devices are not readily directly comparable due to differences therebetween.

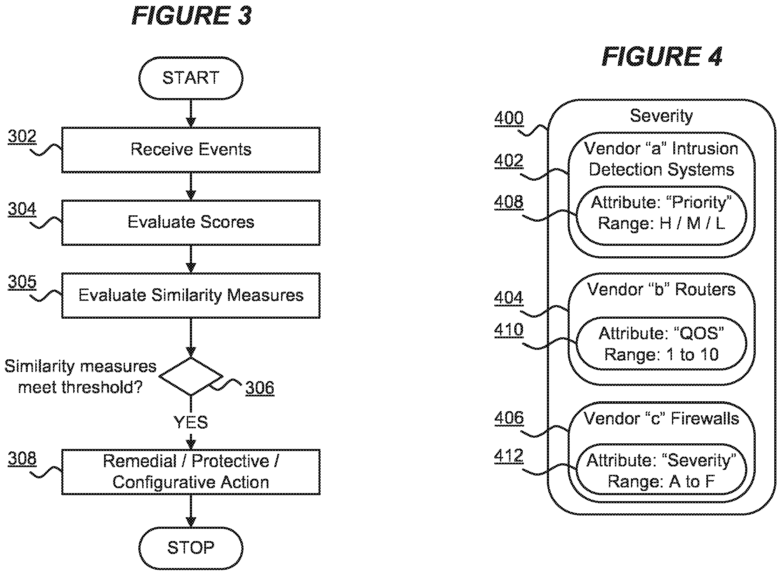

Embodiments of the present invention provide for a mapping of event attributes to categories or classes of event attribute such that attribute information for a particular class of attribute can be discerned for each network appliance. For example, where network device 208a generates events for a network communication having a "source address" attribute and device 208b generates events having an "origin" attribute, both attributes containing a TCP address of a computer system transmitting a TCP segment, such attributes can be mapped to a common class of attribute such as a "source" attribute class. Accordingly, events from both network devices 208a and 208b are categorised by a common class. In this way embodiments of the present invention provide for the application of comparison techniques such as similarity measurement between diverse categorical attributes of events from different network devices. A further example of such categorisation of event attributes is described in detail below with reference to Figure 4.

The arrangement of Figure 2 further includes a computer system 202 having an input unit 204 and a processor 206. The input unit is a hardware, software, firmware or combination component arranged to receive the events generated by the network devices 208a, 208b and 208c. In one embodiment, as illustrated in Figure 2, the input unit 204 receives events by accessing the data stores 210a, 210b and 210c in which the network devices 208a, 208b and 208c store events. Alternatively the input unit 204 could receive events directly from the network devices such as via messages or data structures communicated by the network devices whether proactively or in response to a request from the computer system 202. In a further alternative, the input unit 204 can be arranged to communicate or interface directly with the network devices 208a, 208b and 208c through a network connection, inter-process communication, function or procedure call or an application programming interface of the network devices. In one embodiment, the input unit 204 is configured to access historical event data stored in one or more data stores and containing events generated by network devices 208a, 208b and 208c.

The input unit 204 is configured to receive events for each of a plurality of time periods. Time periods are periods of time of predetermined size, each being most preferably of the same length or duration, and for which event information is received. The temporal relationships between events for a network device provide for the input unit 204 to determine which events belong in which time periods. Alternatively, some or all of the events can be arranged into, associated with or categorised by time periods in the event data stores 210a, 210b and/or 210c, such as by being so arranged, associated or categorised by a network device during the creation or recording of the events.

The processor 206 is a part of a processing system of the computer system 202 such as a hardware, software or firmware processing entity. For example, the processor 206 can be a microprocessor or a software component such as a virtual machine, processing function, or other software component. The processor 206 is arranged to evaluate scores for each of the network devices 208a, 208b and 208c for each of a plurality of time periods based on the events received by the input unit 204. The processor 206 evaluates scores for events including an attribute belonging to a given class of attributes, the class being pre-selected for suitability in identifying network devices being ineffective at identifying malicious occurrences in the network.

For example, Figure 4 illustrates a class of attributes 400 including network device attribute mappings in accordance with an embodiment of the present invention. A class of attributes "Severity" 400 is mapped to attributes in events for three different network device vendors: vendor "a" 402 (vendor for network device 208a); vendor "b" 404 (vendor for network device 208b); and vendor "c" 406 (vendor for device 208c). Each different vendor uses different terminology, structure and values to record essentially similar information. Vendor "a" 402 includes a "Priority" attribute having values in a range "High" ("H"), "Medium" ("M") and "Low" ("L"). Vendor "b" 404 includes a "QOS" (Quality of Service) attribute having numeric values in a range from one to ten, ten representing poor or problematic quality of service and one representing good or trouble-free quality of service. Vendor "c" 406 includes a "severity" attribute having values in a range "a" to "f" with "a" representing lowest severity and "f" representing highest severity. A class of attributes such as "Severity" 400 can be useful to identify any network devices that do not recognise or react to high-severity occurrences in the network 200, such as potential malware attacks and the like. Such network devices are ineffective network devices because of their failure to recognise or react to such occurrences. For each network device 208a, 208b, 208c, the processor 206 evaluates a normalised representative value of the attribute class for each time period as a score for the time period. Values of attributes in events for a time period are normalised to a numerical range common to all events for all network devices. Preferably, the attribute values are normalised by unity based normalisation to a range from zero to one [0-1]. In one embodiment such normalisation is achieved by a linear function. For example, a vendor "a" 402 network device generating events mapped to the attribute class "Severity" 400 can be normalised by applying a numerical value to each of the "H", "M" and "L" values in the attribute range and linearly normalising, thus:

| Attribute Value | Numeric Equivalent $n$ | Number of Categorical Values $N$ | Unity Based Linearly Normalised Score, $\tilde{w}$ |
|---|---|---|---|
| "H" (High) | $n_H = 3$ | $N = 3$ ("H" / "M" / "L") | $\tilde{w} = \dfrac{n}{N} = \dfrac{3}{3} = 1$ |
| "M" (Medium) | $n_M = 2$ | $N = 3$ | $\tilde{w} = \dfrac{n}{N} = \dfrac{2}{3} = 0.667$ |
| "L" (Low) | $n_L = 1$ | $N = 3$ | $\tilde{w} = \dfrac{n}{N} = \dfrac{1}{3} = 0.333$ |

where the notation $\tilde{w}$ indicates that w is normalised such that $0 < \tilde{w} < 1$. In an alternative embodiment, the normalisation can be non-linear so as to emphasise more significant values and/or de-emphasise less significant values. For example, the three categories of "Severity" 400: "H"; "M"; and "L" with increasing unity normalised numerical severity of 0, 0.5 and 1 respectively. In some embodiments, the normalisation function follows a formula such that the normalised score $\tilde{w}$ for

a numeric equivalent $n_X$ of an attribute value $X$ is evaluated based on:

$$\widetilde{w} = \frac{e^{n_X}}{\sum_{i=L}^{H} e^{n_i}}$$

such that $0 < \widetilde{w} < 1$ following exponential assignment of scores in order to emphasise more severe events ("H") having relatively higher values of $n_X$ and distinguish them from more routine or informational events ("L") having relatively lower values of $n_X$. Preferably the function, process, algorithm or procedure required to evaluate a normalised score is provided for an attribute 408, 410, 412 in association with a mapping 402, 404, 406 in the attribute class definition 400.

Notably, the use of common time period definitions for the evaluation of normalised representative scores for devices constitutes a type of temporal normalisation for the device scores since the representative values are aligned to the common time windows.

For each network device 208a, 208b, 208c, the processor 206 evaluates a representative value of the attribute class for each time period based on the normalised scores $\widetilde{w}$ for the time period. In a preferred embodiment the representative value is an average value such as an arithmetic mean value of the normalised scores $\widetilde{w}$ for the attribute in all events occurring in the time period. Thus, a normalised representative score $\tilde{S}(a,j)$ for a network device $a$ for a time period $j$ having $K$ events occurring during the time period can be evaluated as an arithmetic mean according to:

$$\tilde{S}_{(a,j)} = \frac{\sum_{t=1}^{K} \widetilde{w}_t}{K}$$

Preferably, normalised representative scores for an attribute for each device are represented in an $A$ by $B$ matrix $S$ where the $A$ dimension corresponds to network devices and the B dimension corresponds to time periods, thus a score matrix S for the network devices 208a, 208b, 208c for three time periods $j_1$, $j_2$ and $j_3$ can be represented by:

$$S = \begin{bmatrix} \tilde{S}_{(a,j_1)} & \tilde{S}_{(a,j_2)} & \tilde{S}_{(a,j_3)} \\ \tilde{S}_{(b,j_1)} & \tilde{S}_{(b,j_2)} & \tilde{S}_{(b,j_3)} \\ \tilde{S}_{(c,j_1)} & \tilde{S}_{(c,j_2)} & \tilde{S}_{(c,j_3)} \end{bmatrix}$$

In a preferred embodiment, for each network device 208a, 208b, 208c, the processor 206 further evaluates a normalised measure of a rate of events having attributes of the attribute class for each time period. A rate of events corresponds to a rate of generation, creation, raising, storing or producing events by a network device. For example, five events generated in 3 seconds correspond to 1.67 events per second. Thus, a rate $r_{(a,j)}$ for a network device $a$ for a time period $j$ starting at time $t_1$ and ending at time $t_2$ having duration $(t_2 - t_1)$ and having K events occurring during the time period can be evaluated according to:

$$r_{(a,j)} = \frac{\sum_{t=t_1}^{t_2} w_t}{(t_2 - t_1)}$$

The rate r is normalised to $\tilde{r}$ by unity based normalisation such that $0 < \tilde{r} < 1$. Preferably, normalised measures of rates of events for each device for each time period are represented in an $A$ by $B$ matrix $R$ where the $A$ dimension corresponds to network devices and the B dimension corresponds to time periods, thus an event rate matrix R for the network devices 208a, 208b, 208c for three time periods $j_1$, $j_2$ and $j_3$ can be represented by:

$$R = \begin{bmatrix} \tilde{r}_{(a,j_1)} & \tilde{r}_{(a,j_2)} & \tilde{r}_{(a,j_3)} \\ \tilde{r}_{(b,j_1)} & \tilde{r}_{(b,j_2)} & \tilde{r}_{(b,j_3)} \\ \tilde{r}_{(c,j_1)} & \tilde{r}_{(c,j_2)} & \tilde{r}_{(c,j_3)} \end{bmatrix}$$

The processor 206 is further arranged to evaluate a metric as a measure of similarity of scores and/or rates for each pair of devices in a set of all possible pairs of devices for one or more time windows. Most preferably the time windows are defined to comprise at least two time periods over which attribute scores and/or rates are evaluated such that a comparison between devices of scores and/or rates is suitable for identifying differences in the normalised representative scores or normalised rates and changes to normalised representative scores or normalised rates. The similarity analysis is conducted across all pairs of devices such that, for each time window, each device is compared with every other device in the arrangement.

Considering, for example, the matrix of normalised representative scores S:

$$S = \begin{bmatrix} \tilde{s}_{(a,j_1)} & \tilde{s}_{(a,j_2)} & \tilde{s}_{(a,j_3)} \\ \tilde{s}_{(b,j_1)} & \tilde{s}_{(b,j_2)} & \tilde{s}_{(b,j_3)} \\ \tilde{s}_{(c,j_1)} & \tilde{s}_{(c,j_2)} & \tilde{s}_{(c,j_3)} \end{bmatrix}$$

the processor 206 defines a set D of all possible pairs of devices as:

$$D = \{(a,b), (b,c), (a,c)\}$$

Taking a window size of two time periods, a measure of similarity is evaluated as a similarity metric for each pair of devices for each of the time windows in a set F of all time windows:

$$F = \{(j_1, j_2), (j_2, j_3)\}$$

Thus, similarity is evaluated for vectors of representative normalised scores from the matrix S spanning the defined time windows. Accordingly, the processor 206 initially evaluates a similarity measure for the first device pair ($a$, $b$) over each of the two time windows $\{(j_1, j_2), (j_2, j_3)\}$. Thus, a first similarity measure $m_{abf_1}$ is evaluated by comparing the score vector for device $a$ over the first time window $f_1 = (j_1, j_2)$ with the score vector for device b over the first time window $f_1$, thus:

$$m_{abf_1} = similarity \left( [\tilde{s}_{(a,j_1)} \quad \tilde{s}_{(a,j_2)}], [\tilde{s}_{(b,j_1)} \quad \tilde{s}_{(b,j_2)}] \right)$$

(Suitable approaches to the comparison of such vectors are described in detail below.) Then a first similarity measure $m_{abf_2}$ is evaluated by comparing the score vector for device $a$ over the second time window $f_2 = (j_2, j_3)$ with the score vector for device b over the second time window $f_2$, thus:

$$m_{abf_2} = similarity \left( [\tilde{s}_{(a,j_2)} \quad \tilde{s}_{(a,j_3)}], [\tilde{s}_{(b,j_2)} \quad \tilde{s}_{(b,j_3)}] \right)$$

The processor 206 subsequently compares the second device pair (a, c) over each of the two time windows $\{(j_1, j_2), (j_2, j_3)\}$. Finally, the processor 206 compares the third device pair ($b, c$) over each of the two time windows $\{(j_1, j_2), (j_2, j_3)\}$. In this way metrics of similarity measure for time window vectors of normalised representative scores between all combinations of pairs of devices are evaluated. Such scores can be conveniently recorded in a similarity matrix:

$$M = \begin{bmatrix} m_{abf_1} & m_{abf_2} \\ m_{bcf_1} & m_{bcf_2} \\ m_{acf_1} & m_{acf_2} \end{bmatrix}$$

In a preferred embodiment the *similarity* function for evaluating a measure of similarity of a pair of vectors is a cosine similarity function such that a similarity measure for vectors A and B is evaluated by:

$$similarity = \frac{A \cdot B}{\|A\| \|B\|} = \frac{\sum_{i=1}^{n} A_i \times B_i}{\sqrt{\sum_{i=1}^{n} (A_i)^2} \times \sqrt{\sum_{i=1}^{n} (B_i)^2}}$$

By such similarity function each measure of similarity m is normalised in the range $-1 < \tilde{m} < 1$, though with the representative normalised scores $\tilde{w}$ normalised such that $0 < \tilde{w} < 1$ it can be expected that $0 < \tilde{m} < 1$. Accordingly, a measure of similarity approaching unity indicates a greater degree of correlation between devices for a time window while a measure of similarity approaching zero indicates the absence of any correlation between devices for a time window. In an alternative embodiment, the *similarity* function is implemented as a Tanimoto coefficient to indicate similarity as is well known in the art.

While similarity evaluation has been described with reference to only three devices and two time windows covering three time periods, it will be appreciated that any number of three or more devices having representative normalised attribute scores over any number of time periods could be employed. The selection of an appropriate window size in terms of a number of time periods depends on a level of granularity of similarity comparison required and will define a number of dimensions compared by the similarity function (each time period within a window constituting another vector dimension for comparison by a similarity function such as cosine similarity). Further, while the similarity evaluation has been described with reference to the representative normalised scores of attributes, it will be appreciate that the similarity evaluation can equally be applied to the normalised event rate measures such as R described above. In a preferred embodiment, similarity metrics are evaluated for both representative normalised scores for devices and normalised event rate measures. Normalised event rate measures are well suited to identify bursts of event generation activity by devices, such as periods of relatively high numbers of events or, in contrast, relatively low numbers of events. Representative normalised scores are well suited to identify event attribute magnitude such as severity or discrete values of attributes along a normalised scale. Thus one or both such measures are suitable for similarity analysis between devices.

In use an attack is deployed via or to the network 200 such as by the computer system 202 or another system communicating, inserting, injecting or otherwise instigating an attack on the network 200. For example, the computer system 202 can communicate malicious network traffic such as malware communications, intrusion attempts or virus data across the network 200. Figure 3 is a flowchart of a method for identifying an ineffective network device in a set of network devices for a computer network 200 in accordance with an embodiment of the present invention. During or following the attack, the input unit 204 receives event data from network devices 208a, 208b, 208c at step 302 as previously described. Where network devices are capable of, and configure to, react to the attack the event information received by the input unit 204 will include events pertaining to the attack and to such reaction. The processor 206 subsequently evaluates normalised representative scores for attributes for each network device for each time period at step 304 as previously described. At step 305 the processor 206 evaluates similarity measures as previously described. Subsequently, at step 306 the processor 206 identifies one or more of the network devices 208a, 208b, 208c having one or more evaluated similarity measures meeting a predetermined threshold in order to detect a device having a degree of similarity with other devices that is indicative of the device being ineffective at identifying malicious occurrence in the network. Thus, where devices 208a and 208b generate events indicating high severity occurrences on the network 200, and device 208c fails to generate such high severity events, the similarity measures evaluated for representative normalised attribute scores between device 208a and device 208c and between device 208b and 208c will indicate a lower degree of similarity. Where the degree of similarity meets a predetermined threshold degree, the method proceeds to step 308 where responsive action occurs such as one or more of remedial, protective or reconfiguration actions.

Numerous responsive actions can be employed in response to a positive identification of an ineffective network device. In a simplest case an identified ineffective network device is flagged to a user or administrator for attention. In one embodiment, an identified ineffective device is automatically disabled, such as for replacement. Notably, disabling such a device may not address a network attack at hand. In an alternative embodiment, a configuration of an identified ineffective device is modified, such as by: increasing the sensitivity of the device to a particular type of network attack; or installing, activating or configuring new or existing countermeasures to detect and/or protect against a network attack. In a further alternative embodiment, an identified ineffective network device can be caused to enter a new mode of operation such as a high-security, high-threat, high-alert or high-protection mode of operation to provide an increased or maximum level of protection against the attack. That is to say that an identified ineffective network device may include countermeasures or provisions for attending to network attacks when they are detected, the operation of which can be considered a new, elevated or different mode of operation of the device. Where such mode of operation is not effected by the device due to its ineffectiveness in detecting or reacting to an attack, the processor 206 can cause the device to enter such mode based on the lack of similarity of the network device to the behaviour (exhibited by events) or other network devices on the network so as to cause the ineffective network device to provide such facilities as it may possess for attending to, detecting or protecting against attacks.

Thus embodiments of the present invention provide a method and system for comparing and correlating diverse categorical data or variables from potentially many different network devices as data sources. A scoring method based on event attributes mapped to common classes of attributes provides a common normalised numerical range for application of a similarity correlation algorithm. Such an approach provides behavioural analysis and comparison of potentially different network devices, different in terms of a type of device (such as a switch versus a router versus a firewall) and/or in terms of a vendor, model, version, configuration or capability of devices, during an attack in the network. The measure of similarity provides for the identification of network devices being relatively ineffective at identifying or reacting to an attack, such as network devices having outlier measures of similarity or one or more measures of similarity that meet a predetermined threshold measure indicative of ineffectiveness of a device. Embodiments of the present invention effect changes to one or more network devices in response to an identification of an ineffective device, such as, inter alia:

disabling an ineffective network device in order to, for example, implement a replacement network device; modifying a configuration of an ineffective network device to increase the effectiveness of the device in identifying the attack; or causing an ineffective network device to enter a secure, elevated, heightened or reactive mode of operation consistent with the device having detected an attack so as to cause countermeasure or remedial action by the network device.

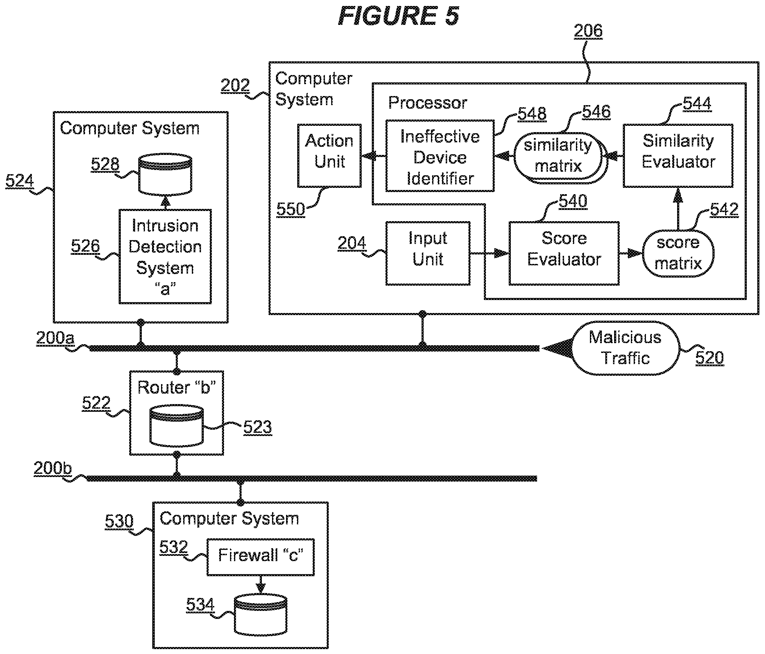

An embodiment of the present invention will now be considered in use by way of example only with reference to Figure 5. Figure 5 is a component diagram of a computer system 202 arranged to detect an ineffective network device in accordance with an exemplary embodiment of the present invention. Many of the features of Figure 5 are identical to those described above with respect to Figure 2 and these will not be repeated here. In the arrangement of Figure 5 two computer networks are provided 200a and 200b with a network router 522 (also referenced as device "b") therebetween. The network router is a software, hardware, firmware or combination component for forwarding network data packets to and between the two networks 200a and 200b. The router is operable to generate events reflecting a state of the router and a state of either of the networks 200a, 200b, and the events are stored in a data store 523 local to the router. A computer system 524 is communicatively connected to network 200a and includes an intrusion detection system 526 (also referenced as device "a") as a software, hardware, firmware or combination component for monitoring the network 200a, such as traffic communicated via the network 200a, for malicious activities, traffic, content or data or policy violations. The intrusion detection system 526 generates events for storage in a data store 528 local to the computer system 524. A second computer system 530 is communicatively connected to network 200b and includes a firewall 532 (also referenced as device "c") as a software, hardware, firmware or combination component for providing network security for either or both the network 200b or the computer system 530, as is understood in the art. The firewall 532 generates events reflecting occurrences, states, attacks, policy violations and the like for storage in a local store 534.

By way of example only, an exemplary event from an intrusion detection system, such as Snort, is provided below:
07/22-15:09:14.140981 [**] [1:19274:1] POLICY attempted download of a PDF with embedded Flash over smtp [**] [Classification: potential Corporate Privacy Violation] [Priority: 1] {TCP} 1.1.1.40:26582 -> 5.5.5.3:25

By way of example only, an exemplary event from a network router such as a Cisco Network Router, is provided below:
"<187>**Jul 22 15:10:13** 10.170.137.1 1:27/3/2/16104]: **%QOS-3-ERR:** Requeue count exceeded 100 for config event (0x10010013) circuit params, event dropped" 2014-07-22T15:10:14.000+01.00,,,15,22,10,july,14,Tuesday,2014,local,,,,10.17 0.13.7.1,,twentyonec,1,,1:27/3/2/16104],"<>_::_..._:///]:+%-:_____( )_,_",,,tcp:64999, syslog,oy1956a002, 21, 12

By way of example only, an exemplary event from a firewall such as a Mcafee firewall, is provided below:
**2014-07-22 15:10:36** DC2000000000467 XSKCIDS01 1 0x42400200 ARP: MAC Address Flip-Flop Suspicious Alert Type: Signature; **Attack Severity: Low;** Attack Conf: Low; Cat: PolicyViolation; Sub-Cat: restricted-access; Detection Mech: protocol-anomaly;
It can be seen that the three exemplary events, each generated by a different type of network device and each device being from a different vendor, are quite different in structure, layout and content. It will be appreciated, therefore, that the events are not susceptible to ready comparison with each other and any ready comparison is not conducive to drawing reasonable and meaningful conclusions on the basis of the events alone. However, the events include attributes that are essentially similar in their semantic meaning and logical purpose. Examples of such similar attributes in each exemplary event are indicated by bold underline. Each event includes a time and/or date as a mechanism for understanding a temporal relationship between events. Further, each event includes a severity indication whether labelled "Priority" (intrusion detection system), "QOS" (Quality of Service, network router) or "Severity" (firewall). Such attributes can be mapped to a common class of attributes as described above with respect to Figure 4.

The arrangement of Figure 5 further includes a computer system 202 including an input unit 204 and a processor 206 substantially as hereinbefore described. The processor 206 is further elaborated to include a score evaluator 540 as a software, hardware, firmware or combination component for generating a score matrix 542 of scores for each device 526, 522, 532 in the set of network devices and for each time period in a set of predefined time periods. Further, the processor 206 includes a similarity evaluator 544 as a software, hardware, firmware or combination component for evaluating a measure of similarity of scores for each pair of devices in a set of all possible pairs of network devices for a predetermined set of time windows. The similarity evaluator 544 generates a similarity matrix 546 for input to an ineffective device identifier 548. The ineffective device identifier 548 is a software, hardware, firmware or combination component for identifying one or more devices in the set of network devices 526, 522, 532 that is ineffective at detecting an attack or malicious occurrence in the network. Finally, an action unit 550 is a software, hardware, firmware or combination component configured to undertake a remedial, protective or reconfiguration action in response to the identification of an ineffective network device as previously described.

The arrangement of Figure 5 will now be considered in use for an exemplary scenario in which sets of events are generated by each of the network devices 526, 522 and 532 before, during and after the presence of malicious network traffic 520 on network 200a. The malicious network traffic 520 is preferably intentionally communicated to the network 200a in a controlled manner in order that the effect of the presence of the malicious traffic 520 on the network devices 526, 522, 532 can be analysed.

The following table provides a set of exemplary events generated by the intrusion detection system "a" 526 between time 00:00:00 and 00:03:59 and received or accessed by the input unit 204. The malicious traffic 520 is communicated to the network between 00:02:00 and 00:02:59. Each event has a severity measure in a range of one (lowest) to five (highest) and each event is normalised using a unity based linear normalisation function. It can be seen that the intrusion detection system "a" 526 generates typically two events per second until 00:02:17 at which a burst of five events are generated, each having a highest severity level between times 00:02:17 and 00:02:42 in response to the presence of malicious network traffic on the network 200a.

| Intrusion Detection System "a" 526 Events | | |
|---|---|---|
| **Event Timestamp** | **Severity (1..5)** | **Unity Based Linearly Normalised Score, $\tilde{w}$** |
| 00:00:17 | 1 | 0.2 |
| 00:00:53 | 1 | 0.2 |
| 00:01:26 | 1 | 0.2 |
| 00:01:42 | 1 | 0.2 |
| 00:02:01 | 1 | 0.2 |
| 00:02:17 | 5 | 1 |
| 00:02:26 | 5 | 1 |
| 00:02:32 | 5 | 1 |
| 00:02:40 | 5 | 1 |
| 00:02:42 | 5 | 1 |
| 00:03:06 | 1 | 0.2 |
| 00:03:28 | 1 | 0.2 |

The following table provides a set of exemplary events generated by the router "b" 522 between time 00:00:00 and 00:03:59 and received or accessed by the input unit 204. Each event has a severity measure in a range of zero (lowest) to ten (highest) - i.e. eleven levels of severity. Each event is normalised using a unity based linear normalisation function. It can be seen that the router "b" 522 does not react noticeably to the presence of the malicious traffic 520 between 00:02:00 and 00:02:59 and the rate of generation of events is constant throughout the time period (approximately three events per second).

| Router "b" 522 Events | | |
|---|---|---|
| **Event Timestamp** | **Severity (0..10)** | **Unity Based Linearly Normalised Score, $\tilde{w}$** |
| 00:00:04 | 0 | 0 |
| 00:00:26 | 0 | 0 |
| 00:00:58 | 1 | 0.09 |
| 00:01:20 | 0 | 0 |
| 00:01:42 | 2 | 0.18 |
| 00:01:51 | 0 | 0 |
| 00:02:09 | 0 | 0 |
| 00:02:19 | 1 | 0.09 |
| 00:02:43 | 0 | 0 |
| 00:03:33 | 0 | 0 |
| 00:03:43 | 1 | 0.09 |
| 00:03:58 | 0 | 0 |

**[0054]** The following table provides a set of exemplary events generated by the firewall "c" 532 between time 00:00:00 and 00:03:59 and received or accessed by the input unit 204. Each event has a severity measure in a range "H" (highest), "M" (medium) and "L" (lowest). Each event is normalised using a unity based linear normalisation function. It can be seen that the firewall "c" 532 generates approximately two events per second except between 00:02:00 and 00:02:59 where three events highest severity events are generated in response to the presence of malicious network traffic on the network 200a (passed to the network 200b via router 522).

| Firewall "c" 532 Events | | |
|---|---|---|
| **Event Timestamp** | **Severity (H=3/M=2/L=1)** | **Unity Based Linearly Normalised Score, $\tilde{w}$** |
| 00:00:14 | 1 | 0.33 |
| 00:00:51 | 1 | 0.33 |
| 00:01:26 | 1 | 0.33 |
| 00:01:47 | 2 | 0.67 |
| 00:02:12 | 3 | 1 |
| 00:02:27 | 3 | 1 |
| 00:02:36 | 3 | 1 |
| 00:03:02 | 2 | 0.67 |
| 00:03:28 | 1 | 0.33 |

**[0055]** The score evaluator 540 receives the events from the input unit 204 and initially consolidates events into predetermined time periods. Four time periods are employed in the present example, $j_1$ to $j_4$, defined as:

| | **Time Period** |
|---|---|
| $j_1$ | 00:00:00 - 00:00:59 |
| $j_2$ | 00:01:00 - 00:01:59 |
| $j_3$ | 00:02:00 - 00:02:59 |
| $j_4$ | 00:03:00 - 00:03:59 |

**[0056]** The time periods provide a type of temporal normalisation for representative score evaluation for each device.

**[0057]** The score evaluator 540 evaluates a normalised representative value $\tilde{s}$ for each device "a" 526, "b" 522, "c" 532, for each time period $j_1$ to $j_4$. In the present example the normalised representative value $\tilde{s}$ is an arithmetic mean of linearly normalised scores occurring in each time period event. Thus, for the intrusion detection system "a" 526 the representative normalised scores are evaluated as:

| Intrusion Detection System "a" 526 Representative (arithmetic mean) Normalised Scores | |
|---|---|
| **Time Period** | **Representative Normalised Score, $\tilde{s}$** |
| $j_1$ | $\tilde{s}_{(a,j_1)} = 0.2$ |
| $j_2$ | $\tilde{s}_{(a,j_2)} = 0.2$ |
| $j_3$ | $\tilde{s}_{(a,j_3)} = 0.87$ |
| $j_4$ | $\tilde{s}_{(a,j_4)} = 0.2$ |

**[0058]** Similarly, for the router "b" 522 the representative normalised scores are evaluated as:

| Router "b" 522 Representative (arithmetic mean) Normalised Scores | |
|---|---|
| **Time Period** | **Representative Normalised Score, $\tilde{s}$** |
| $j_1$ | $\tilde{s}_{(b,j_1)} = 0.03$ |
| $j_2$ | $\tilde{s}_{(b,j_2)} = 0.06$ |
| $j_3$ | $\tilde{s}_{(b,j_3)} = 0.03$ |
| $j_4$ | $\tilde{s}_{(b,j_4)} = 0.03$ |

And for the firewall "c" 532 the representative normalised scores are evaluated as:

| Firewall "c" 532 Representative (arithmetic mean) Normalised Scores | |
|---|---|
| **Time Period** | **Representative Normalised Score, $\tilde{s}$** |
| $j_1$ | $\tilde{s}_{(c,j_1)} = 0.33$ |
| $j_2$ | $\tilde{s}_{(c,j_2)} = 0.5$ |
| $j_3$ | $\tilde{s}_{(c,j_3)} = 1$ |
| $j_4$ | $\tilde{s}_{(b,j_4)} = 0.5$ |

The score evaluator 540 generates a score matrix 542 $S$ including all representative normalised scores for all time periods for all devices as hereinbefore described. The resulting score matrix 542 in the present example is:

$$S = \begin{bmatrix} 0.2 & 0.2 & 0.87 & 0.2 \\ 0.03 & 0.06 & 0.03 & 0.03 \\ 0.33 & 0.5 & 1 & 0.5 \end{bmatrix}$$

Additionally, in preferred embodiments, the score evaluator 540 further evaluates a normalised rate of events $\tilde{r}$ for each device "a" 526, "b" 522, "c" 532, for each time period $j_1$ to $j_4$. In the present example the normalised rate of events $\tilde{r}$ is linearly normalised to a maximum rate observed in all events in all samples. Thus, for the intrusion detection system "a" 526 the normalised rates are evaluated as:

| Intrusion Detection System "a" 526 Normalised Event Rate | |
|---|---|
| **Time Period** | **Normalised Event Rate, $\tilde{r}$** |
| $j_1$ | $\tilde{r}_{(a,j_1)} = 0.33$ |
| $j_2$ | $\tilde{r}_{(a,j_2)} = 0.33$ |
| $j_3$ | $r_{(a,j_3)} = 0.1$ |
| $j_4$ | $\tilde{r}_{(a,j_4)} = 0.33$ |

Similarly, for the router "b" 522 the normalised rates are evaluated as:

| Router "b" 522 Normalised Event Rate | |
|---|---|
| **Time Period** | **Normalised Event Rate, $\tilde{r}$** |
| $j_1$ | $\tilde{r}_{(b,j_1)} = 0.6$ |
| $j_2$ | $\tilde{r}_{(b,j_2)} = 0.6$ |
| $j_3$ | $\tilde{r}_{(b,j_3)} = 0.6$ |
| $j_4$ | $\tilde{r}_{(b,j_4)} = 0.6$ |

And for the firewall "c" 532 the normalised rates are evaluated as:

| Firewall "c" 532 Normalised Event Rate | |
|---|---|
| **Time Period** | **Normalised Event Rate, $\tilde{r}$** |
| $j_1$ | $\tilde{r}_{(c,j_1)} = 0.4$ |
| $j_2$ | $\tilde{r}_{(c,j_2)} = 0.4$ |
| $j_3$ | $\tilde{r}_{(c,j_3)} = 0.6$ |
| $j_4$ | $\tilde{r}_{(b,j_4)} = 0.4$ |

The score evaluator 540 generates an event rate matrix R including all normalised event rates for all time periods for all devices as hereinbefore described. The resulting event rate matrix in the present example is:

$$R = \begin{bmatrix} 0.33 & 0.33 & 1 & 0.33 \\ 0.6 & 0.6 & 0.6 & 0.6 \\ 0.4 & 0.4 & 0.6 & 0.4 \end{bmatrix}$$

The similarity evaluator 544 receives or accesses either or both the score matrix 542 S and the rate matrix R to undertake an evaluation of a measure of similarity of scores for all possible pairs of devices over predetermined time windows. A set D of all possible pairs of devices is defined as:

$$D = \{(a,b),(b,c),(a,c)\}$$

Time windows are predefined as adjacent (sequential) time periods of predetermined length (duration) and each window preferably includes least two adjacent time periods from the set of all time periods $\{j_1 j_2 j_3 j_4\}$. In the present example, a window size of two adjacent time periods is used and a measure of similarity is evaluated by the similarity evaluator 544 as a similarity metric for each pair of devices for each of the time windows in a set F of all time windows:

$$F = \{(j_1,j_2),(j_2,j_3),(j_3,j_4)\}$$

Accordingly, the similarity evaluator 544 initially evaluates a similarity measure for the first device pair (a, b) over each of the three time windows $\{(j_1,j_2),(j_2,j_3),(j_3,j_4)\}$ for the matrix of representative normalised scores 542 S. Thus, a first similarity measure $m_{abf_1}$ is evaluated by comparing the score vector for device a over the first time window $f_1 = (j_1,j_2)$ with the score vector for device b over the first time window $f_1$, thus:

$$m_{abf_1} = similarity\ ([\tilde{s}_{(a,j_1)} \quad \tilde{s}_{(a,j_2)}],[\tilde{s}_{(b,j_1)} \quad \tilde{s}_{(b,j_2)}]) = similarity\ ([0.2\ 0.2],[0.03\ 0.06])$$

Using a cosine similarity metric for the *similarity* function as described above, $m_{abf_1}$ is evaluated to 0.949. Extending this approach to all possible pairs of devices in D for all time windows $f_1 = (j_1,j_2)$, $f_2 = (j_2,j_3)$, and $f_3 = (j_3,j_4)$, a similarity matrix 546 $M_{SCORE}$ can be evaluated as:

$$M_{SCORE} = \begin{bmatrix} m_{abf_1} & m_{abf_2} & m_{abf_3} \\ m_{bcf_1} & m_{bcf_2} & m_{bcf_3} \\ m_{acf_1} & m_{acf_2} & m_{acf_3} \end{bmatrix} = \begin{bmatrix} 0.95 & 0.64 & 0.85 \\ 0.99 & 0.80 & 0.95 \\ 0.98 & 0.97 & 0.97 \end{bmatrix}$$

Further, the similarity evaluator 544 preferably evaluates a similarity measure for the first device pair (a, b) over each of the three time windows $\{(j_1,j_2),(j_2,j_3),(j_3,j_4)\}$ for the matrix of normalised event rates R. Thus, a first similarity measure $q_{abf_1}$ is evaluated by comparing the event rate vector for device a over the first time window $f_1 = (j_1,j_2)$ with the event rate vector for device b over the first time window $f_1$, thus:

$$q_{abf_1} = similarity\left(\begin{bmatrix} \tilde{r}_{(a,j_1)} & \tilde{r}_{(a,j_2)} \end{bmatrix}, \begin{bmatrix} \tilde{r}_{(b,j_1)} & \tilde{r}_{(b,j_2)} \end{bmatrix}\right) = similarity\left([0.33\ 0.33], [0.6\ 0.6]\right)$$

Using a cosine similarity metric for the *similarity* function as described above, $m_{abf_1}$ is evaluated to 1. Extending this approach to all possible pairs of devices in D for all time windows $f_1 = (j_1, j_2)$, $f_2 = (j_2, j_3)$, and $f_3 = (j_3, j_4)$, a similarity matrix 546 $M_{RATE}$ can be evaluated as:

$$M_{RATE} = \begin{bmatrix} m_{abf_1} & m_{abf_2} & m_{abf_3} \\ m_{bcf_1} & m_{bcf_2} & m_{bcf_3} \\ m_{acf_1} & m_{acf_2} & m_{acf_3} \end{bmatrix} = \begin{bmatrix} 1 & 0.89 & 0.89 \\ 1 & 0.98 & 0.98 \\ 1 & 0.96 & 0.96 \end{bmatrix}$$

The similarity matrices 546 $M_{SCORE}$ and $M_{RATE}$ are received or otherwise accessed by the ineffective device identifier 548 to identify network devices having evaluated measures of similarity meeting a predetermined threshold. In the present example the predetermined threshold is 0.90 such that any measure of similarity below 0.90 is indicative of a network device being ineffective for the identification of attacks in the network. It can be seen in $M_{SCORE}$ that the comparison between devices "a" 526 and "b" 522 lead to similarity measures meeting this threshold by being less than 0.90 in the second and third time windows $f_2$ and $f_3$ with similarity measures of 0.64 and 0.80 in time window $f_2$ and a similarity measure of 0.85 in time window $f_3$. In contrast, the comparison between devices "a" 526 and "c" 534 show no similarity measures meeting the threshold. It can therefore be inferred that devices "a" 526 and "c" 534 are consistent in their events generated in respect of the malicious traffic 520 whereas device "b" 522 shows inconsistencies that suggest it is an ineffective network device for identifying an attack in the networks 200a, 200b.

Yet further, it can be seen in $M_{RATE}$ that the comparison of normalised event rates between devices "a" 526 and "b" 522 lead to similarity measures that also meet the threshold of 0.90 in the second and third time windows $f_2$ and $f_3$ with a similarity measures of 0.89 in time window $f_2$ and a similarity measure of 0.89 in time window $f_3$. In contrast, the comparison between devices "a" 526 and "c" 534 show no similarity measures meeting the threshold. It can therefore be further inferred (i.e. confirmed) that devices "a" 526 and "c" 534 are consistent in the rate of generation of events (i.e. there is a burst of events) in response to the malicious network traffic 520 whereas device "b" 522 shows inconsistencies that suggest it is an ineffective network device for identifying an attack in the networks 200a, 200b. In response to an identification of an ineffective network device by the ineffective device identifier 548, the action unit 550 undertakes remedial, corrective or reconfiguration actions as previously described to protect, improve or secure the network for potential future network attacks.

Thus, in this way, embodiments of the present invention are able to compare and correlating diverse categorical data or variables from potentially many different network devices as data sources, even where the data sources are disparate in nature, structure, form, content, terminology or data type. The evaluated measures of similarity $M_{SCORE}$ and $M_{RATE}$ provide for the identification of network devices being relatively ineffective at identifying or reacting to an attack, such as network devices having outlier measures of similarity or one or more measures of similarity that meet a predetermined threshold measure indicative of ineffectiveness of a device, either in terms of the nature, type or semantic meaning of events (such as severity) or in terms of the rate of generation of events (to detect bursts or periods of absence of events).

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the claims.

**Claims**

1. A method for detecting an ineffective network device in a set of network devices for a computer network (200) as a device ineffective at identifying an attack in the network, the method comprising:

   receiving (302) events generated by the set of network devices (208) for each of a plurality of time periods, each event including an attribute belonging to a class of attributes;
   based on the received events, evaluating (304) a normalised representative value of the attribute as a score for each network device for each of the plurality of time periods;
   for each of a plurality of pairs of devices in the set of network devices, evaluating (305) a measure of similarity of scores for the pair for one or more time windows, each time window comprising two or more of the time periods;
   identifying (306) a network device having evaluated similarity measures meeting a predetermined threshold as ineffective network devices, wherein events in the class of attributes indicate a severity of an occurrence in the computer network,
   wherein the score for a device for a time period is normalised by unity based normalisation, and
   wherein the measure of similarity is evaluated using a cosine similarity calculation.

2. The method of any preceding claim further comprising disabling an identified ineffective network device.

3. The method of claim 1 further comprising modifying a configuration of an identified ineffective network device to increase a sensitivity of the ineffective network device to detect the attack.

4. The method of claim 1 further comprising causing an identified ineffective network device to enter a secure mode of operation to protect against the attack.

5. A computer system arranged to detect an ineffective network device in a set of network devices for a computer network (200) as a device ineffective at identifying an attack in the network, the computer system including:

   an input unit (204) to receive events generated by the set of network devices (208) for each of a plurality of time periods, each event including an attribute belonging to a class of attributes;
   a processing system having at least one processor (206) and being arranged to:

   evaluate a normalised representative value of the attribute as a score for each network device for each of the plurality of time periods based on the received events; evaluating a measure of similarity of scores for each of a plurality of pairs of devices in the set of network devices for one or more time windows, each time window comprising two or more of the time periods; and identify a network device having evaluated similarity measures meeting a predetermined threshold as ineffective network devices,
   wherein events in the class of attributes indicate a severity of an occurrence in the computer network,
   wherein the score for a device for a time period is normalised by unity based normalisation, and
   wherein the measure of similarity is evaluated using a cosine similarity calculation.

6. The computer system of claim 5 wherein the at least one processor is arranged to calculate a score for a device for a time period from an arithmetic mean of attribute values for the time period.

7. The computer system of any of claims 5 to 6 wherein the at least one processor is arranged to calculate a score for a device for a time period from a rate of generation of events including an attribute belonging to the class of attributes.

8. The computer system of any of claims 5 to 7 wherein the at least one processor is further arranged to disable an identified ineffective network device.

9. The computer system of any of claims 5 to 7 wherein the at least one processor is further arranged to modify a configuration of an identified ineffective network device to increase a sensitivity of the ineffective network device to detect the attack.

10. The computer system of any of claims 5 to 7 wherein the at least one processor is further arranged to cause an identified ineffective network device to enter a secure mode of operation to protect against the attack.

11. A computer program element comprising computer program code to, when loaded into a computer system and

EP 3 158 706 B1

executed thereon, cause the computer to perform the steps of a method as claimed in any of claims 1 to 4.

**Patentansprüche**

1. Verfahren zur Erkennung einer ineffektiven Netzwerkvorrichtung in einem Satz von Netzwerkvorrichtungen für ein Computernetzwerk (200) als eine Vorrichtung, die beim Identifizieren eines Angriffs im Netzwerk ineffektiv ist, wobei das Verfahren umfasst:

Empfangen (302) von Ereignissen, die von dem Satz von Netzwerkvorrichtungen (208) für jede einer Mehrzahl von Zeitspannen erzeugt werden, wobei jedes Ereignis ein Attribut umfasst, das zu einer Klasse von Attributen gehört;
Evaluieren (304) eines normalisierten repräsentativen Wertes des Attributs als eine Bewertung für jede Netzwerkvorrichtung für jede der Mehrzahl von Zeitspannen basierend auf den empfangenen Ereignissen;
Evaluieren (305) für jedes einer Mehrzahl von Paaren von Vorrichtungen im Satz von Netzwerkvorrichtungen eines Maßes von Ähnlichkeit von Bewertungen für das Paar für ein oder mehrere Zeitfenster, wobei jedes Zeitfenster zwei oder mehr der Zeitspannen umfasst;
Identifizieren (306) einer Netzwerkvorrichtung mit evaluierten Ähnlichkeitsmaßen, die eine vorbestimmte Schwelle erfüllen, als ineffektive Netzwerkvorrichtungen, wobei Ereignisse in der Klasse von Attributen eine Schwere eines Vorgangs im Computernetzwerk anzeigen,
wobei die Bewertung für eine Vorrichtung für eine Zeitspanne durch einheitsbasierte Normalisierung normalisiert wird, und
wobei das Ähnlichkeitsmaß unter Verwendung eines Cosinus-Ähnlichkeitsberechnung evaluiert wird.

2. Verfahren nach einem der vorhergehenden Ansprüche, ferner umfassend ein Deaktivieren einer identifizierten ineffektiven Netzwerkvorrichtung.

3. Verfahren nach Anspruch 1, ferner umfassend ein Modifizieren einer Konfiguration einer identifizierten ineffektiven Vorrichtung, um eine Empfindlichkeit der ineffektiven Vorrichtung zum Erkennen des Angriffs zu erhöhen.

4. Verfahren nach Anspruch 1, ferner umfassend ein Veranlassen einer identifizierten ineffektiven Vorrichtung, zum Schutz gegen den Angriff in einen sicheren Betriebsmodus einzutreten.

5. Computersystem, ausgelegt zum Erkennen einer ineffektiven Netzwerkvorrichtung in einem Satz von Netzwerkvorrichtungen für ein Computernetzwerk (200) als eine Vorrichtung, die beim Identifizieren eines Angriffs im Netzwerk ineffektiv ist, wobei das Computersystem umfasst:

eine Eingabeeinheit (204) zum Empfangen von Ereignissen, die vom Satz von Netzwerkvorrichtungen (208) für jede einer Mehrzahl von Zeitspannen erzeugt werden, wobei jedes Ereignis ein Attribut umfasst, das zu einer Klasse von Attributen gehört;
ein Verarbeitungssystem mit mindestens einem Prozessor (206), der ausgelegt ist zum: Evaluieren eines normalisierten repräsentativen Wertes des Attributs als eine Bewertung für jede Netzwerkvorrichtung für jede der Mehrzahl von Zeitspannen basierend auf den empfangenen Ereignissen; Evaluieren eines Maßes von Ähnlichkeit von Bewertungen für jedes einer Mehrzahl von Paaren von Vorrichtungen im Satz von Netzwerkvorrichtungen für ein oder mehrere Zeitfenster, wobei jedes Zeitfenster zwei oder mehr der Zeitspannen umfasst; und Identifizieren einer Netzwerkvorrichtung mit evaluierten Ähnlichkeitsmaßen, die eine vorbestimmte Schwelle erfüllen, als ineffektive Netzwerkvorrichtungen,
wobei Ereignisse in der Klasse von Attributen eine Schwere eines Vorgangs im Computernetzwerk anzeigen
wobei die Bewertung für eine Vorrichtung für eine Zeitspanne durch einheitsbasierte Normalisierung normalisiert wird, und
wobei das Ähnlichkeitsmaß unter Verwendung eines Cosinus-Ähnlichkeitsberechnung evaluiert wird.

6. Computersystem nach Anspruch 5, wobei der mindestens eine Prozessor so ausgelegt ist, dass er eine Bewertung für eine Vorrichtung für eine Zeitspanne aus einem arithmetischen Mittel von Attributwerten für die Zeitspanne berechnet.

7. Computersystem nach einem der Ansprüche 5 bis 6, wobei der mindestens eine Prozessor so ausgelegt ist, dass er eine Bewertung für eine Vorrichtung für eine Zeitspanne aus einer Erzeugungsrate von Ereignissen berechnet, die ein Attribut umfassen, das zu der Klasse von Attributen gehört.

8. Computersystem nach einem der Ansprüche 5 bis 7, wobei der mindestens eine Prozessor ferner zum Deaktivieren einer identifizierten ineffektiven Netzwerkvorrichtung ausgelegt ist.

9. Computersystem nach einem der Ansprüche 5 bis 7, wobei der mindestens eine Prozessor ferner so ausgelegt ist, dass er eine Konfiguration einer identifizierten ineffektiven Vorrichtung modifiziert, um eine Empfindlichkeit der ineffektiven Vorrichtung zum Erkennen des Angriffs zu erhöhen.

10. Computersystem nach einem der Ansprüche 5 bis 7, wobei der mindestens eine Prozessor ferner so ausgelegt ist, dass er eine identifizierte ineffektive Netzwerkvorrichtung .veranlasst, zum Schutz gegen den Angriff in einen sicheren Betriebsmodus einzutreten.

11. Computerprogrammelement, umfassend Computerprogrammcode, der, wenn auf ein Computersystem geladen und darauf ausgeführt, den Computer zum Ausführen der Schritte eines Verfahrens nach einem der Ansprüche 1 bis 4 veranlasst.

## Revendications

1. Procédé de détection d'un dispositif de réseau inefficace dans un ensemble de dispositifs de réseau pour un réseau informatique (200) comme étant un dispositif inefficace lors de l'identification d'une attaque dans le réseau, le procédé comprenant :

la réception (302) d'événements générés par l'ensemble de dispositifs de réseau (208) pour chacune d'une pluralité de périodes de temps, chaque événement comportant un attribut appartenant à une classe d'attributs ; sur la base des événements reçus, l'évaluation (304) d'une valeur représentative normalisée de l'attribut comme score pour chaque dispositif de réseau pour chacune de la pluralité de périodes de temps ; pour chacune d'une pluralité de paires de dispositifs dans l'ensemble de dispositifs de réseau, l'évaluation (305) d'une mesure de similarité de scores pour la paire pour une ou plusieurs fenêtres temporelles, chaque fenêtre temporelle comprenant deux ou plusieurs des périodes de temps ; l'identification (306) d'un dispositif de réseau ayant des mesures de similarité évaluées satisfaisant un seuil prédéterminé correspondant à des dispositifs de réseau inefficaces, dans lequel des événements dans la classe d'attributs indiquent une gravité d'une occurrence dans le réseau informatique, dans lequel le score d'un dispositif pour une période de temps est normalisé par une normalisation unitaire, et dans lequel la mesure de similarité est évaluée en utilisant un calcul de similarité cosinus.

2. Procédé selon n'importe quelle revendication précédente comprenant en outre la désactivation d'un dispositif de réseau inefficace identifié.

3. Procédé selon la revendication 1 comprenant en outre la modification d'une configuration d'un dispositif de réseau inefficace identifié pour augmenter une sensibilité du dispositif de réseau inefficace pour détecter l'attaque.

4. Procédé selon la revendication 1 comprenant en outre l'incitation d'un dispositif de réseau inefficace identifié à passer sur un mode sécurisé de fonctionnement pour se protéger contre l'attaque.

5. Système informatique agencé pour détecter un dispositif de réseau inefficace dans un ensemble de dispositifs de réseau pour un réseau informatique (200) comme étant un dispositif inefficace lors de l'identification d'une attaque dans le réseau, le système informatique comportant :

une unité d'entrée (204) pour recevoir des événements générés par l'ensemble de dispositifs de réseau (208) pour chacune d'une pluralité de périodes de temps, chaque événement comportant un attribut appartenant à une classe d'attributs ; un système de traitement comportant au moins un processeur (206) et étant agencé pour :

évaluer une valeur représentative normalisée de l'attribut comme score pour chaque dispositif de réseau pour chacune de la pluralité de périodes de temps sur la base des événements reçus ; évaluer une mesure de similarité de scores pour chacune d'une pluralité de paires de dispositifs dans l'ensemble de dispositifs de réseau pour une ou plusieurs fenêtres temporelles, chaque fenêtre temporelle comprenant deux ou plusieurs des périodes de temps ; et identifier un dispositif de réseau ayant des mesures de similarité évaluées satisfaisant un seuil prédéterminé correspondant à des dispositifs de réseau inefficaces,

dans lequel des événements dans la classe d'attributs indiquent une gravité d'une occurrence dans le réseau informatique,

dans lequel le score d'un dispositif pour une période de temps est normalisé par une normalisation unitaire, et dans lequel la mesure de similarité est évaluée en utilisant un calcul de similarité cosinus.

6. Système informatique selon la revendication 5 dans lequel l'au moins un processeur est agencé pour calculer un score pour un dispositif pour une période de temps à partir d'une moyenne arithmétique de valeurs d'attributs pour la période de temps.

7. Système informatique selon l'une quelconque des revendications 5 à 6 dans lequel l'au moins un processeur est agencé pour calculer un score pour un dispositif pour une période de temps à partir d'un taux de génération d'événements comportant un attribut appartenant à la classe d'attributs.

8. Système informatique selon l'une quelconque des revendications 5 à 7 dans lequel l'au moins un processeur est agencé en outre pour désactiver un dispositif de réseau inefficace identifié.

9. Système informatique selon l'une quelconque des revendications 5 à 7 dans lequel l'au moins un processeur est agencé en outre pour modifier une configuration d'un dispositif de réseau inefficace identifié pour augmenter une sensibilité du dispositif de réseau inefficace pour détecter l'attaque.

10. Système informatique selon l'une quelconque des revendications 5 à 7 dans lequel l'au moins un processeur est agencé en outre pour inciter un dispositif de réseau inefficace identifié à passer sur un mode sécurisé de fonctionnement pour se protéger contre l'attaque.

11. Elément de programme informatique comprenant un code de programme informatique pour, à son chargement dans un système informatique et son exécution sur ce dernier, amener l'ordinateur à réaliser les étapes d'un procédé selon l'une quelconque des revendications 1 à 4.

## FIGURE 1

| CPU 102 | STORAGE 104 | I/O 106 |

BUS 108

## FIGURE 2

Computer System

Processor 206

Input Unit 204

202

200

Network Device 208a — 210a

Network Device 208b — 210b

Network Device 208c — 210c

# FIGURE 3

```
        ( START )
            │
            ▼
302  ┌─────────────────────┐
     │   Receive Events    │
     └─────────────────────┘
            │
            ▼
304  ┌─────────────────────┐
     │   Evaluate Scores   │
     └─────────────────────┘
            │
            ▼
305  ┌───────────────────────────┐
     │ Evaluate Similarity       │
     │ Measures                  │
     └───────────────────────────┘
            │
            ▼
Similarity measures        ◇  306
meet threshold?
            │
           YES
            │
            ▼
308  ┌───────────────────────────┐
     │ Remedial / Protective /   │
     │ Configurative Action      │
     └───────────────────────────┘
            │
            ▼
         ( STOP )
```

# FIGURE 4

400 — Severity

  402 — Vendor "a" Intrusion Detection Systems

    408 — Attribute: "Priority" Range: H / M / L

  404 — Vendor "b" Routers

    410 — Attribute: "QOS" Range: 1 to 10

  406 — Vendor "c" Firewalls

    412 — Attribute: "Severity" Range: A to F

*FIGURE 5*

EP 3 158 706 B1

**EP 3 158 706 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7376969 B1

- US 20120072983 A1